# FASCICULE DE BREVET EUROPEEN

(11) **EP 3 329 208 B1**
(45) Date de publication et mention de la délivrance du brevet: **06.09.2023**
(21) Numéro de dépôt: 16756730.4
(22) Date de dépôt: 28.07.2016
(51) Int. Cl.: G01B 5/20, G01B 11/24, G02C 13/00

(54) **MÉTHODE DE VÉRIFICATION DE LA CONFORMITÉ À UN CRITÈRE D'UTILISATION PRÉDÉTERMINÉ D'UNE MONTURE DE LUNETTES ET DISPOSITIF ASSOCIÉ**
ÜBERPRÜFUNGSMETHODE EINES BESTIMMTEN VERWENDUNGSKRITERIUMS EINER BRILLENFASSUNG UND ENTSPRECHENDE VORRICHTUNG
METHOD FOR VERIFYING THE COMPLIANCE OF A PREDETERMINED USE CRITERION OF A SPECTACLE FRAME AND ASSOCIATED DEVICE

(30) Priorité: 31.07.2015 FR 1557448
(43) Date de publication de la demande: 06.06.2018
(73) Titulaire: Essilor International, 94220 Charenton-le-Pont (FR)
(72) Inventeur: ANATOLE, Vincent, 94227 Charenton-Le-Pont Cedex (FR); ALLOUIS, Thierry, 94227 Charenton-Le-Pont Cedex (FR); FERREIRA, Daniel, 94227 Charenton-Le-Pont Cedex (FR)
(74) Mandataire: Jacobacci Coralis Harle
(86) Numéro de dépôt international: PCT/FR2016/051975
(87) Numéro de publication internationale: WO 2017/021633

(56) Documents cités:
- FR-A1- 2 910 647
- FR-A1- 2 959 831
- FR-A1- 3 016 052
- US-A- 5 485 399
- US-A1- 2013 231 941

## Description

### DOMAINE TECHNIQUE AUQUEL SE RAPPORTE L'INVENTION

La présente invention concerne de manière générale le domaine de la fabrication des paires de lunettes.

Elle concerne plus particulièrement une méthode de vérification de la conformité à un critère d'utilisation prédéterminé d'une monture de lunettes destinée à recevoir deux lentilles ophtalmiques.

### ARRIERE-PLAN TECHNOLOGIQUE

On a constaté récemment une diversification de l'offre en matière de monture de lunettes. De nombreuses entreprises se lancent dans la fabrication de montures de lunettes sans avoir pleinement connaissance des contraintes de matériaux et de forme imposées par le montage de lentilles ophtalmiques dans ces montures. Le développement d'une offre de montures de lunettes à bas prix entraîne en outre la mise sur le marché de montures de lunettes de qualité inférieure.

Pour ces différentes raisons, il existe sur le marché des montures de lunettes pour lesquels les procédés de traitement industriels classiques des lentilles ophtalmiques ne peuvent être utilisés. Le taillage et le montage des lentilles ophtalmiques destinées à ces montures requièrent l'utilisation de techniques spéciales, nécessitant la plupart du temps une intervention manuelle de l'opérateur. Dans certains cas, le taillage et le montage de lentilles ophtalmiques destinées à ces montures est même impossible, au moins pour certaines prescriptions.

A l'heure actuelle, la détection des montures de lunettes pour lesquelles le taillage et le montage des lentilles ophtalmiques requiert des techniques spéciales, ou est difficile et souvent effectué tardivement, après la commande passée par le client. Cela entraîne des retards dans le processus de fabrication de la paire de lunettes, voire la nécessité pour le client d'effectuer un autre choix.

FR 2 910 647 A1 décrit un procédé de détourage de lentilles ophtalmiques. FR 3 016 052 A1 décrit un procédé de détermination d'une définition géométrique d'un équipement optique personnalisé. US 2013/231941 A1 décrit un système et une méthode de distribution optique automatisée. FR 2 959 831 A1 décrit un procédé de préparation d'une lentille ophtalmique équipée d'une marque mémoire. US 5 485 399 A décrit une méthode de fourniture de verres de lunettes.

### OBJET DE L'INVENTION

Afin de remédier aux inconvénients précités de l'état de la technique, la présente invention propose une méthode de vérification de la conformité à un critère d'utilisation prédéterminé d'une monture de lunettes, autorisant la détection des montures de lunettes nécessitant l'utilisation de techniques spéciales ou ne pouvant pas accueillir certains types de lentilles ophtalmiques.

Plus particulièrement, on propose selon l'invention une méthode de vérification de la conformité à un critère d'utilisation prédéterminé d'une monture de lunettes destinée à recevoir deux lentilles ophtalmiques selon la revendication 1.

Ainsi, grâce à la méthode selon l'invention, il est possible d'évaluer la qualité d'une monture et sa capacité à accueillir des lentilles ophtalmiques correspondantes.

En effet, pour pouvoir accueillir une lentille ophtalmique, la monture doit respecter des critères techniques. En outre, pour la fabrication de la paire de lunettes correspondante, la monture doit également respecter d'autres critères liés aux procédés de traitement industriels standards de la monture et des lentilles ophtalmique.

Grâce à la méthode selon l'invention, il est possible de mettre en évidence par exemple les montures présentant :
- une non reproductibilité de montures de lunettes de même référence,
- des moyens de montage des lentilles ophtalmiques non standardisées (drageoir ou perçage de forme non standard),
- une déformabilité de la monture interdisant le montage de lentilles ophtalmiques,
- une forme globale interdisant le montage de lentilles ophtalmiques présentent une épaisseur supérieure à un seuil, ou
- un défaut de fabrication.

En outre, elle autorise la mise en évidence des montures de lunettes pour lesquelles les procédés de traitement standards sont interdits, en raison par exemple :
- d'une incompatibilité entre les caractéristiques de la monture et la technique d'acquisition standard du contour du drageoir,
- d'une incompatibilité entre les caractéristiques des lentilles ophtalmiques destinées à être montées dans la monture et la technique de détourage standard des lentilles,
- d'une incompatibilité entre le matériau de la monture et les étapes de chauffage et/ou de nettoyage mises en oeuvre au cours des procédés de montage standards des lentilles ophtalmiques dans la monture.

La méthode selon l'invention permet, dans l'étape a), de classer les montures de lunettes existant sur le marché en différentes catégories indiquant les procédés industriels pouvant être mis en oeuvre pour cette monture, en se basant sur un fichier d'identification prédéterminé fournit par le fabricant de la monture, ou sur un examen visuel de la monture.

Les informations récoltées dans ce fichier ou par cet examen visuel sont croisées avec les données obtenues à l'étape b). Cela autorise une vérification des informations contenues dans le fichier d'identification prédéterminé associé à la monture.

En outre, ces données obtenues à l'étape b) et les informations récoltées à l'étape a) sont combinées pour déterminer la valeur de chaque paramètre d'une liste de paramètres, déterminée en fonction de ladite catégorie de monture déterminée à l'étape a).

La liste des paramètres est donc ajustée en fonction de la catégorie de monture. Certains paramètres ne sont en effet pertinents que pour certaines catégories de montures.

On détermine ensuite à l'étape d) la conformité de la monture au critère prédéterminé en fonction des valeurs des paramètres déterminées à l'étape c). Cela permet notamment d'évaluer si la solidité et la finition esthétique de la paire de lunettes obtenue après montage des lentilles ophtalmiques dans la monture sera satisfaisante.

Les catégories de montures utilisées à l'étape a) sont relatives aux technologies de lecture des montures et de taillage des lentilles ophtalmiques courantes et peuvent évoluer dans le temps au fur et à mesure des progrès techniques dans ces domaines.

D'autres caractéristiques non limitatives et avantageuses de la méthode conforme à l'invention sont décrites dans les revendications 2 à 8.

L'invention concerne également un dispositif de vérification de la conformité à un critère d'utilisation prédéterminé d'une monture de lunettes destinée à recevoir deux lentilles ophtalmiques selon les revendications 9 et 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un diagramme détaillant les différentes étapes de la méthode de vérification selon l'invention,
- les figures 2 à 5 montrent des exemples de montures de lunettes classées dans différentes catégories de montures.

L'invention propose une méthode de vérification de la conformité à un critère d'utilisation prédéterminé d'une monture de lunettes destinée à recevoir deux lentilles ophtalmiques.

Ce critère d'utilisation de la monture est un critère de faisabilité d'une paire de lunettes indiquant que la monture est adaptée à recevoir les lentilles ophtalmiques correspondantes, appelé dans la suite le critère de faisabilité.

Il s'agit également d'un critère de faisabilité industrielle indiquant que la monture est adaptée à recevoir les lentilles ophtalmiques correspondantes à travers un procédé de fabrication industriel prédéterminé. Ce critère sera appelé dans la suite le critère de faisabilité industrielle.

Selon un exemple non-revendiqué, d'autres critères peuvent également être envisagés, comme un critère de qualité de la paire de lunettes obtenue ou un critère d'esthétisme.

Chacun de ces critères peut être un critère absolu, c'est-à-dire un critère évalué pour tous les types de lentilles ophtalmiques et toute prescription, ou un critère relatif, déterminé pour un type de lentilles ophtalmiques prédéfini.

Par exemple, dans le cas des critères relatifs, le critère de faisabilité ou de faisabilité industriel peut être différent selon que la lentille ophtalmique présente une épaisseur ou une courbure plus ou moins grande. En d'autres termes, ces critères relatifs sont fonctions de la prescription correspondant aux lentilles destinées à être montées dans la monture et des caractéristiques de matériau de la lentille.

Plus précisément, le critère de faisabilité indique si la monture est adaptée à recevoir une lentille ophtalmique quelconque. Ce critère de faisabilité est rempli lorsque le matériau, la forme globale et les moyens de fixation des lentilles ophtalmiques sur cette monture satisfont certaines conditions.

Par exemple, le matériau doit être suffisamment rigide pour maintenir les lentilles ophtalmiques, la forme globale ne doit pas présenter de parties en débord au-dessus des lentilles ophtalmiques et le drageoir doit présenter une forme et une profondeur minimale adaptées au maintien de lentilles ophtalmiques dans les cercles de la monture.

Le critère de faisabilité industrielle indique si la monture est adaptée à recevoir une lentille ophtalmique quelconque à travers un procédé de fabrication industriel standardisé prédéterminé.

Par exemple, ce procédé peut imposer que le drageoir des cercles de la monture soit lu par un instrument spécifique, que la lentille ophtalmique destinée à cette monture soit détourée par un outil spécifique, que la monture soit chauffée pour faciliter l'insertion des lentilles ophtalmiques dans les cercles et que la paire de lunettes obtenue soit nettoyée à l'aide d'un produit chimique de composition donnée.

Le critère de faisabilité industriel reflète alors la compatibilité de la monture considérée avec chacune des étapes de ce procédé.

La méthode de vérification comprend entre autres les étapes suivantes :
a) on détermine au moins une caractéristique géométrique et/ou mécanique et/ou structurelle de cette monture, et on en déduit, parmi un ensemble de catégories de montures prédéterminées, la catégorie de monture à laquelle appartient ladite monture,
b) on détermine un contour en deux ou trois dimensions d'au moins une desdites lentilles ophtalmiques destinées à être montées dans ladite monture ou d'un cercle de cette monture,
c) on évalue la valeur de chaque paramètre d'une liste de paramètres de ladite monture, cette liste étant déterminée en fonction de ladite catégorie de monture déterminée à l'étape a), et la valeur d'au moins une partie desdits paramètres étant évaluée en fonction dudit contour déterminé à l'étape b),
d) on déduit des valeurs desdits paramètres de la monture déterminées à l'étape c) la conformité de la monture au critère prédéterminé.

Cette méthode est mise en oeuvre par un dispositif de vérification selon l'invention comprenant une unité de traitement informatique.

Cette unité de traitement informatique est programmée pour commander la réalisation ou réaliser les étapes a) à d). Elle peut commander la réalisation ou réaliser toutes les étapes.

Il existe trois principales catégories de montures de lunettes. On distingue ainsi les montures de lunettes cerclées, les montures de lunettes semi-cerclées (également appelées montures à arcades) et les montures de lunettes sans cercle (également appelées montures percées).

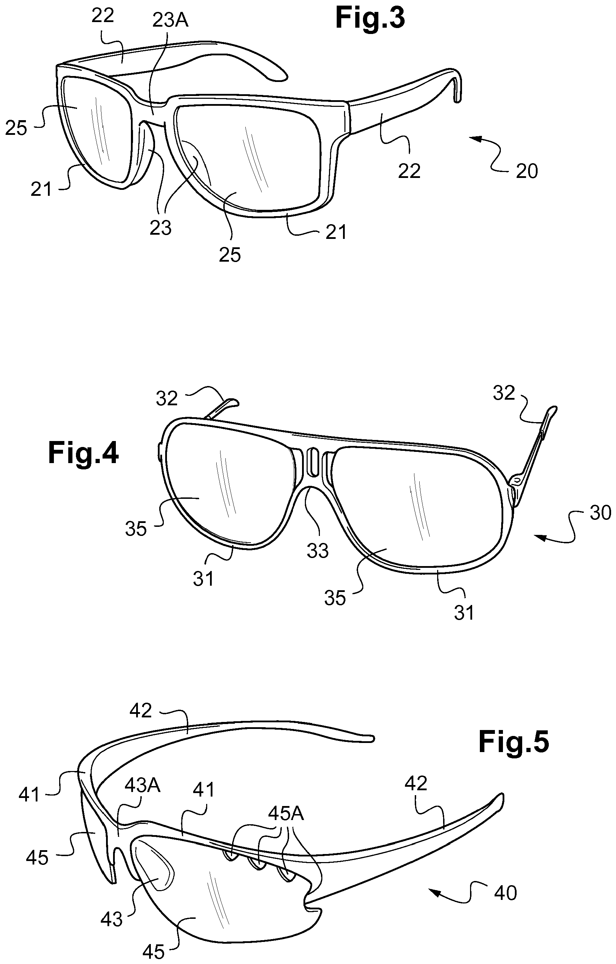

Les montures de lunettes cerclées comportent classiquement deux cercles qui sont destinés à accueillir chacun une lentille ophtalmique détourée. Ces deux cercles sont reliés l'un à l'autre par un pontet et portent chacun une branche. Chaque cercle présente une rainure, communément appelée drageoir, qui court le long de sa face intérieure. Les montures 20 ; 30 représentées sur les figures 3 et 4 sont des exemples de montures cerclées.

La monture 20 cerclée de la figure 3 comprenant deux cercles 21 reliés chacun à l'une de deux branches 22 et une partie nasale comprenant le pontet 23A et des zones d'appui 23 sur le nez du porteur. Elle accueille des lentilles ophtalmique 25.

La monture 30 cerclée de la figure 4 présente deux cercles 31 et deux branches 32, lesdits cercles 31 étant ouverts au niveau d'une partie nasale de cette monture. Cette partie nasale comporte le pontet 33 et des zones d'appui sur le nez du porteur (non représentées sur la figure 4). Elle accueille des lentilles ophtalmique 35.

Lorsque la monture de lunettes est cerclée, la lentille ophtalmique doit être détourée de manière à présenter le long de sa tranche une nervure d'emboîtement, communément appelée biseau. Le biseau ainsi formé sur la tranche de la lentille est alors adapté à venir s'emboîter dans le drageoir de la monture cerclée.

Les montures de lunettes semi-cerclées comportent deux arcades sur les faces intérieures desquelles s'étendent des nervures, ainsi que deux fils de maintien qui sont raccordés aux extrémités des arcades pour former avec celles-ci des contours fermés.

La monture 40 représentée sur la figure 5 est un exemple de monture semi-cerclée. Cette monture 40 présente deux arcades 41 et deux branches 42 articulées sur ces arcades, lesdites arcades 41 étant reliées par un partie nasale de cette monture. Cette partie nasale comporte le pontet 43A et des zones d'appui 43 sur le nez du porteur. Elle accueille des lentilles ophtalmiques 45.

Lorsque la monture de lunettes est semi-cerclée, la lentille ophtalmique doit être détourée de manière à présenter en creux le long de sa tranche une rainure périphérique. La lentille est alors maintenue en place dans la monture de lunettes en emboîtant la partie supérieure de sa tranche dans la nervure prévue le long de la face interne de l'arcade correspondante, et en engageant le fil de maintien dans la rainure.

Enfin, les montures de lunettes sans-cercle comportent deux branches et un pontet, mais sont dépourvues de cercle ou d'arcade. Ces branches et ce pontet sont adaptés à être fixés auxdites lentilles grâce à des trous de perçage préalablement réalisés dans les lentilles ophtalmiques.

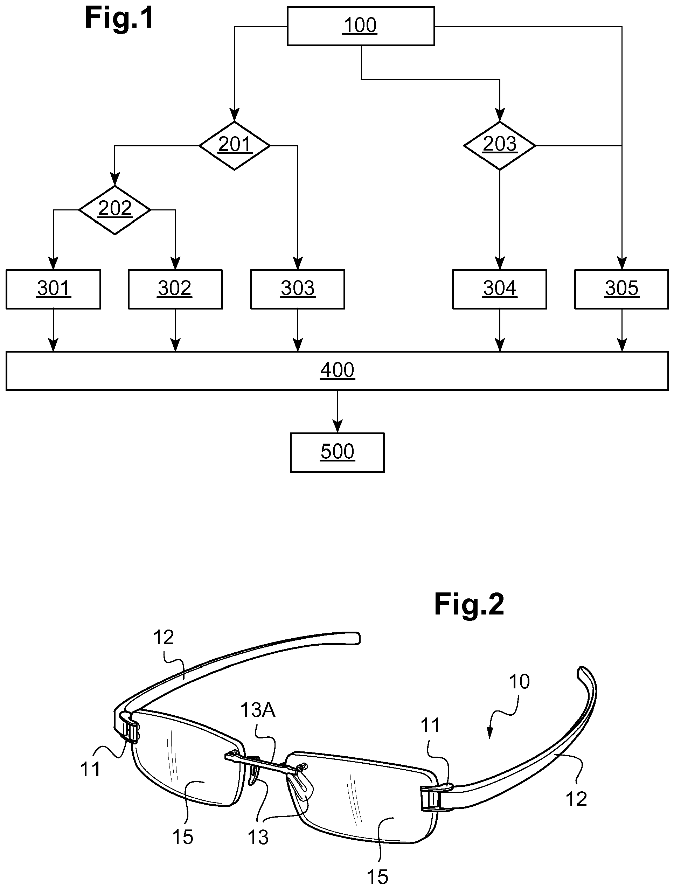

La monture 10 représentée sur la figure 2 est un exemple de monture percée, sans cercle.

Elle comprend deux branches 12 articulées chacune sur un élément de support 11 qui est fixé à l'une des lentilles ophtalmiques 15 de cette paire de lunettes par vissage dans les trous de perçage ménagés à cet effet dans ces lentilles. Une partie nasale relie les deux lentilles ophtalmiques. Cette partie nasale comprend une barre horizontale 13A formant le pontet et deux plaquettes 13 destinés à être placées sur le nez du porteur.

Lorsque la monture de lunettes est sans cercle, la lentille ophtalmique doit être détourée de manière à présenter une tranche dont la section est droite, puis être percée de manière à ce que l'on puisse y fixer solidement le pontet et la branche correspondante de la monture de lunettes.

Le rôle de l'opticien est donc de monter une paire de lentilles neuves (on parle de « lentilles à détourer ») sur la monture de lunettes sélectionnée par le porteur.

Il peut s'agir d'une monture de lunettes neuve, ou d'une monture de lunettes usagée (cas où le porteur de lunettes souhaite changer ses lentilles ophtalmiques tout en conservant sa monture de lunettes).

Dans le cas où elle est neuve, la monture de lunettes est généralement fournie à l'opticien avec des lentilles de présentation (ou gabarits) de puissances nulles et d'épaisseurs constantes.

Dans le cas où elle est usagée, la monture de lunettes est généralement fournie à l'opticien avec des lentilles ophtalmiques à remplacer.

Ces lentilles ophtalmiques qui se trouvent initialement dans la monture de lunettes (neuve ou usagée) seront dans la suite de cet exposé désignées par l'expression « lentilles de référence ».

Avant de détourer des lentilles ophtalmiques neuves afin de remplacer ces lentilles de référence, l'opticien doit mettre en oeuvre une opération d'acquisition du contour selon lequel chaque lentille ophtalmique neuve devra être détourée.

### Etape a)

L'étape a), représentée par le bloc 100 de la figure 1, consiste en une classification de la monture considérée parmi différentes catégories de monture prédéterminées.

Cette classification est faite en fonction de ladite au moins une caractéristique géométrique et/ou mécanique et/ou structurelle de cette monture déterminée à l'étape a).

En pratique, selon la méthode de l'invention, lorsque l'opérateur reçoit une nouvelle monture, il détermine une pluralité de caractéristiques géométriques et/ou mécanique et/ou structurelle de cette monture, et il en déduit à quelle catégorie de monture appartient ladite monture.

L'unité de traitement informatique est programmée pour, à l'étape a), déterminer l'appartenance de la monture considérée à l'une des catégories de monture prédéterminées.

L'unité de traitement informatique détermine cette catégorie sur la base d'information saisies par l'opérateur, ou extraites d'un fichier numérique, d'informations transmises par des dispositifs de mesure, ou par exemple par traitement d'une ou plusieurs images capturées de la monture.

Chacune de ces caractéristiques géométriques et/ou mécaniques et/ou structurelles de la monture peut être déterminée par lecture d'un fichier d'identification de la monture associé à cette monture ou visuellement par cet opérateur.

Dans le premier cas, cas qui ne correspond pas à l'invention revendiquée, l'opérateur récupère les informations contenues dans le fichier d'identification de la monture et en déduit les caractéristiques recherchées.

Le fichier d'identification peut être un document imprimé accompagnant physiquement la monture et indiquant différentes caractéristiques de celle-ci, par exemple, matériau, tracé en deux dimensions du contour des cercles et/ou des lentilles, tracé du profil de la section du drageoir, dimensions, courbure de la monture.

Le fichier d'identification peut également être un fichier numérique associé à la monture par l'intermédiaire d'une référence numérique, d'un code barre, ou d'une étiquette RFID apposée sur la monture. Ce fichier numérique peut contenir toutes les informations citées précédemment, avec en outre un contour en trois dimensions des cercles ou de la lentille correspondante.

Il peut être récupéré par l'unité de traitement informatique, qui en extrait les caractéristiques recherchées.

En variante, l'opérateur peut également déterminer la pluralité de caractéristiques géométriques et/ou mécanique et/ou structurelle de cette monture visuellement, par l'examen manuel de la monture et éventuellement par la prise de mesures manuelles sur la monture.

De préférence, l'opérateur saisit le résultat de l'examen manuel de la monture et/ou des mesures réalisées dans l'unité de traitement informatique.

Lesdites caractéristiques géométriques et/ou mécaniques et/ou structurelles de la monture déterminée à l'étape a), comprennent au moins l'une des caractéristiques définies dans l'étape a) de la revendication 1 et, de préférence, au moins une des caractéristiques suivantes:
- forme générale de la monture : simple ou complexe,
- type de maintien des lentilles ophtalmiques sur la monture : monture cerclée avec un drageoir, semi-cerclée avec une partie de cercle biseauté et un fil de nylon, percée avec moyens de vissage sur les lentilles ophtalmiques ou un maintien mixte combinant plusieurs de ces moyens de maintien, ces dernières montures étant appelées dans la suite, montures multi-maintien,
- forme du profil du drageoir de la monture : en V, en U, en T par exemple, et/ou position de ce drageoir par rapport aux faces avant et arrière de la monture : centrage du drageoir par rapport à l'épaisseur du cercle de la monture, symétrie du profil de la section du drageoir,
- forme de la partie nasale de la monture, destinée à être en contact avec le nez du porteur, imposant des risques de collision plus ou moins grands avec la lentille,
- présence d'éléments recouvrant partiellement une face arrière ou avant de la lentille ophtalmique disposée dans la monture,
- caractéristiques mécaniques du matériau de la monture, notamment degré de flexibilité de la monture,
- présence de zones de concavité, aussi appelées dans la suite « zones concaves », dans ledit contour du cercle de la monture ou de la lentille ophtalmique correspondante.

Chaque catégorie de monture de l'ensemble de catégories de monture est par exemple relative au type d'instrument nécessaire pour déterminer, à l'étape b), ledit contour en deux ou trois dimensions de la lentille ophtalmique destinée à être montée dans ladite monture ou du cercle de cette monture, et/ou au type d'instrument nécessaire pour détourer cette lentille ophtalmique.

Alternativement, on peut également envisager que les catégories de montures soient déterminées en fonction du procédé utilisé pour déterminer le contour en deux ou trois dimensions de la lentille ophtalmique destinée à être montée dans ladite monture ou du cercle de cette monture et/ou la méthode utilisée pour détourer cette lentille.

Ainsi, dans l'exemple de mise en oeuvre de la méthode selon l'invention décrite ici, on envisage par exemple différents procédés et instruments pouvant être utilisés pour lire le contour du drageoir du cercle ou de la partie de cercle destinée à recevoir la lentille ophtalmique ou déterminer le contour de la lentille destinée à être montée dans la monture.

De manière similaire, on envisage que deux instruments différents peuvent être mis en oeuvre pour détourer chaque lentille ophtalmique destinées à être montée dans cette monture.

Les montures sont alors réparties en quatre catégories, selon les possibilités de lecture et de détourage possible.

En pratique, ici, ces quatre catégories sont définies de la manière suivante.

Une première catégorie est appelée dans la suite catégorie des « montures standards ».

Ces montures présentent une forme globale simple, avec une structure cerclée, semi-cerclée du type « nylor » ou non cerclée, c'est-à-dire percée, standard dont la courbure est faible ou moyenne.

En outre, pour les montures cerclées, le drageoir ménagé en renfoncement dans la tranche interne de chaque cercle ou portion de cercle présente une section transversale en forme de V symétrique.

La partie nasale de la monture est de faible étendue.

Aucun élément recouvrant partiellement une face arrière ou avant de la lentille ophtalmique disposée dans la monture n'est présent.

Ces montures sont réalisées dans un matériau rigide, métal ou plastique dur.

Le contour du cercle de la monture ou de la lentille ophtalmique correspondante ne présente aucune zone de concavité.

La monture 10 représentée sur la figure 2 appartient à cette première catégorie. Cette monture 10 est percée, non cerclée.

Une deuxième catégorie de montures est appelée dans la suite catégorie des « montures standards plus ».

Ces « montures standards plus » présentent des caractéristiques similaires à celles des montures de la première catégorie, à ceci près qu'elles présentent une forme pouvant favoriser les collisions entre lentilles ophtalmiques et monture au-delà d'une épaisseur seuil de la lentille ophtalmique : il s'agit pas exemple d'une monture ayant des zones d'appui sur le nez du porteur ou des zones de jonction entre branches et cercles, par exemple une articulation entre branches et cercles, particulièrement larges. Ces zones peuvent alors en effet entrer en collision avec chaque lentille ophtalmique et empêcher le montage correct de la lentille ophtalmique dans le cercle.

On définit pour chaque zone de collision possible avec la lentille une distance maximale libre entre le milieu du drageoir et le point de collision monture/lentille le plus proche de ce milieu du drageoir.

Les montures pour lesquelles cette distance maximale libre est inférieure ou égale à un centimètre sont classées dans la deuxième catégorie.

Par ailleurs, ces montures présentent une forme globale simple, avec une structure cerclée, semi-cerclée du type « nylor » ou non cerclée, c'est-à-dire percée, standard dont la courbure est faible ou moyenne.

Aucun élément recouvrant partiellement une face arrière ou avant de la lentille ophtalmique disposée dans la monture n'est présent.

Ces montures sont réalisées dans un matériau rigide, métal ou plastique dur.

Le contour du cercle de la monture ou de la lentille ophtalmique correspondante ne présente aucune zone de concavité.

La monture 20 représentée sur la figure 3 appartient à cette deuxième catégorie. Elle est ici cerclée. Les zones d'appui 23 sur le nez du porteur de la partie nasale de cette monture 20 sont particulièrement larges et peuvent entraîner des collisions.

Le drageoir ménagé en renfoncement dans la tranche interne de chaque cercle ou portion de cercle présente une section transversale en forme de V qui peut ici être symétrique ou asymétrique.

Il s'agit par exemple de montures dont le drageoir présente une section en V avec une branche du V plus grande que l'autre.

Les montures standards plus peuvent également présenter un drageoir dont la section présente une forme atypique, par exemple en T ou en U.

Les montures de ces première et deuxième catégories ont en commun le fait que l'acquisition du contour du cercle de la monture ou de la lentille destinée à être montée dans cette monture peut être obtenu à l'aide d'instruments standards, tels qu'un lecteur de contour muni d'un palpeur comme le lecteur TESS^{©} ou un lecteur-centreur-bloqueur comme l'outil Mr. Blue^{©} de la demanderesse.

Concrètement, lorsque la monture de lunettes est cerclée, cette opération d'acquisition consiste généralement, pour l'opticien, à utiliser le lecteur de contour pour palper le contour intérieur du cercle de la monture des lunettes sélectionnée afin de déterminer précisément les coordonnées de points caractérisant la forme du contour de l'un au moins des cercles.

En revanche, lorsque la monture de lunettes est de type semi-cerclée ou sans cercle (les lentilles étant alors percées), on utilise un gabarit (c'est-à-dire généralement une lentille de référence fournie à l'opticien avec la monture de lunettes) pour déterminer la forme que devra présenter la lentille ophtalmique à détourer. Il s'agit alors d'utiliser un dispositif de capture d'image afin de capturer l'image de cette lentille de référence. Une acquisition optique d'une image de ce gabarit extrait de la monture de lunettes permet en effet de relever la forme du contour de ce gabarit ainsi que la position des éventuels trous de ce gabarit. Cela est réalisé par un ordinateur à l'aide d'un algorithme de détection de contour qui traite l'image capturée.

En revanche, les lentilles ophtalmiques de la première catégorie de monture peuvent être détourées au moyen d'une meuleuse standard, typiquement une meuleuse comportant un ou plusieurs outils de détourage mobiles selon 3 axes de mobilité, tandis que les lentilles ophtalmiques de la deuxième catégorie de monture doivent être détourées au moyen d'un outil spécifique moins courant, par exemple une meuleuse comportant un ou plusieurs outils de détourage mobiles selon 5 axes de mobilité.

Une troisième catégorie de montures est appelée dans la suite catégorie des « montures spéciales ».

Ces « montures spéciales » regroupent notamment les montures présentant les caractéristiques suivantes :
- des moyens de maintien de la lentille mixtes, par exemple un drageoir sur une partie du contour de la lentille, et un fil sur une partie du contour type monture « nylor », impliquant que la lentille ophtalmique présente un contour non uniforme, par exemple ici, un contour comportant une partie munie d'une rainure pour accueillir le fil nylor et une autre partie comportant une nervure adaptée à s'engager dans le drageoir de la monture; et/ou,
- une grande flexibilité du matériau constituant la monture.

Ces montures peuvent par ailleurs présenter une forme globale simple avec une structure cerclée, semi-cerclée du type « nylor » ou non cerclée, c'est-à-dire percée, standard dont la courbure est faible, moyenne ou forte.

Le contour du cercle de la monture ou de la lentille ophtalmique correspondante ne présente aucune zone de concavité.

De manière générale, l'acquisition du contour du cercle des montures de cette troisième catégorie ou de la lentille destinée à être montée dans une telle monture doit être réalisée à l'aide d'un instrument spécifique, tels qu'un outil d'acquisition de contour adapté à capturer et traiter une pluralité d'images de la lentille ophtalmique seule et/ou de la monture, dans un plan de capture d'image présentant différentes orientations par rapport à cette lentille et/ou cette monture.

On peut également envisager que cet instrument spécifique comprenne un dispositif d'acquisition d'une représentation en trois dimensions de la lentille ophtalmique et/ou de la monture.

Les lentilles ophtalmiques de cette troisième catégorie de monture peuvent en revanche être détourées au moyen d'une meuleuse standard, telle que décrite précédemment.

Un exemple de monture appartenant à cette catégorie est représenté sur la figure 4. Cette monture 30 cerclée présente deux cercles 31 et deux branches 32, lesdits cercles 31 étant ouverts au niveau de la partie nasale 33 de cette monture. Cette ouverture des cercles 32 rend impossible la lecture de ces cercles par les instruments de lecture standards.

Une quatrième catégorie de montures est appelée dans la suite catégorie des « montures spéciales plus».

Ces « montures spéciales plus » regroupent notamment les montures présentant les caractéristiques des « montures spéciales », et présentant en outre une distance maximale libre inférieure ou égale à un centimètre, donc un risque accru de collision entre la monture et les lentilles ophtalmiques.

Ces « montures spéciales plus » regroupent également les montures de forme complexes, par exemple dont le contour présente des régions concaves.

Il s'agit aussi des montures accueillant des lentilles ophtalmiques de formes complexes, présentant un contour avec des régions concaves ou des trous d'aération dans leur volume.

Enfin, appartiennent également à cette quatrième catégorie les montures ayant des « ajouts », c'est-à-dire des parties décoratives s'étendant en avant ou en arrière du plan moyen des cercles ou des lentilles ophtalmiques montées dans ces cercles, en surplomb de la lentille ophtalmique. Ces ajouts impliquent des risques de collisions importants.

De manière générale, l'acquisition du contour du cercle des montures de cette quatrième catégorie ou de la lentille destinée à être montée dans une telle monture doit être réalisée, comme pour les montures de la troisième catégorie, à l'aide d'un instrument spécifique, tel qu'un outil d'acquisition de contour adapté à capturer et traiter une pluralité d'images de la lentille ophtalmique seule et/ou de la monture, dans un plan de capture d'image présentant différentes orientations par rapport à cette lentille et/ou cette monture.

On peut également envisager que cet instrument spécifique comprenne un dispositif d'acquisition d'une représentation en trois dimensions de la lentille ophtalmique et/ou de la monture.

Les lentilles ophtalmiques de cette quatrième catégorie de monture doivent être détourées, comme celles de la deuxième catégorie, au moyen d'un outil spécifique, par exemple une meuleuse comportant un ou plusieurs outils de détourage mobiles selon 5 axes de mobilité.

Un exemple de monture appartenant à cette quatrième catégorie de monture est représenté sur la figure 5. Cette monture 40 semi-cerclée présente une forte courbure et ses lentilles ophtalmiques 45 présentent un contour ayant des zones de concavité 45A.

### Etape b)

A l'étape b), l'opérateur détermine un contour en deux ou trois dimensions d'au moins une desdites lentilles ophtalmiques destinées à être montées dans ladite monture 10 ; 20 ; 30 ; 40 ; 50 ou d'un cercle de cette monture 10 ; 20 ; 30 ; 40 ; 50 (blocs 301 à 305 de la figure 1).

Plus précisément, l'opérateur, dans un exemple non-revendiqué, ou l'unité informatique, selon un mode de réalisation revendiqué, commande la détermination du contour d'au moins une desdites lentilles par l'un des instruments décrits précédemment. Cet instrument est déterminé en fonction de la catégorie de monture déterminée à l'étape a).

Cette étape b) est réalisée en fonction de la catégorie de monture à laquelle appartient la monture considérée, et en fonction du type de maintien des lentilles ophtalmiques dans la monture. En particulier, dans une étape préliminaire à l'étape b), l'opérateur détermine le type de la monture considérée parmi les types suivants : monture cerclée, semi-cerclée, percée, multi-maintien.

De préférence, l'opérateur saisit alors cette information dans l'unité de traitement informatique.

En variante, cette reconnaissance du type de monture est automatisée. Elle est réalisée directement par l'unité de traitement informatique, par exemple à partir d'une image capturée de la monture, traitée par un algorithme de reconnaissance d'image pour déterminer les moyens de montage des lentilles dans la monture.

Le procédé et, par voie de conséquence, l'instrument utilisés pour déterminer ce contour, sont fonction de la catégorie à laquelle appartient la monture 10 ; 20 ; 30 ; 40 ; 50.

En outre, le procédé et l'instrument utilisés pour déterminer ce contour dépendent d'autres caractéristiques de la monture, telles que le type de maintien des lentilles ophtalmiques et la courbure de cette monture.

Plus précisément, ici, lorsqu'il a été déterminé que la monture considérée appartient à l'une des première et deuxième catégories de montures standards et standards plus, le type de cette monture est déterminé dans une étape préliminaire à l'étape b) correspondant au bloc 201 de la figure 1.

Lorsqu'il est déterminé, à cette étape préliminaire, que la monture est semi-cerclée ou percée, l'opérateur commande l'acquisition du contour en deux dimensions de la lentille ophtalmique destinée à être montée dans la monture (bloc 303 de la figure 1).

C'est le cas par exemple de la monture 10 de la figure 2. L'opérateur fait l'acquisition du contour en deux dimensions de l'une des lentilles ophtalmiques 15 de cette monture 10. Cette acquisition en deux dimensions est faite grâce à un instrument standard tel que décrit précédemment.

Il peut par exemple faire l'acquisition de ce contour à partir d'un plan de la lentille à monter dans la monture fourni avec la monture de lunettes. Il s'agit d'un tracé du contour de la lentille ophtalmique qui est prédéterminé et associé à la monture sous une forme réelle (papier) ou virtuelle (fichier numérique).

Il peut également par exemple commander l'acquisition de ce contour à partir de la lentille de référence fournie avec la monture de lunettes.

Ici, l'opérateur détermine de préférence le contour d'une seule lentille ophtalmique.

Ce contour est mis en mémoire dans l'unité de traitement informatique.

Lorsque l'opérateur détermine, lors de ladite étape préliminaire, que la monture est cerclée, l'opérateur vérifie ensuite (bloc 202 de la figure 1) si la courbure de la monture dépasse ou non un seuil de courbure prédéterminé.A cet effet, l'opérateur détermine la base de la monture exprimée en dioptries. La valeur seuil de la base de la monture est par exemple comprise entre 5 et 7, de préférence égale à 6.

L'opérateur utilise pour cela un outil, par exemple des abaques ou un dispositif de capture d'image.

A cet effet, il est possible, par exemple, de poser la monture sur des abaques donnant la base de la monture à partir de la forme de la face avant de cette monture.

De préférence, l'opérateur saisit alors cette information sur la base de la monture dans l'unité de traitement informatique.

En variante, cette reconnaissance du type de monture est automatisée.

On peut alors envisager de capturer une image de la monture vue de dessus et de déterminer cette base par le traitement de l'image capturée.

La détermination de la base de la monture est alors réalisée directement par l'unité de traitement informatique, par exemple à partir d'une image capturée de la monture, traitée par un algorithme de reconnaissance d'image.

Lorsque la base de la monture est inférieure à 6, l'opérateur réalise l'acquisition du contour en trois dimensions de la lentille ophtalmique destinée à être montée dans la monture (bloc 301 de la figure 1) à l'aide de l'un des instruments standards cités précédemment. Il détermine de préférence le contour de chaque cercle.

C'est le cas par exemple de la monture 20 de la figure 3 qui présente une courbure faible. Dans ce cas, l'opérateur détermine le contour en trois dimensions de chaque cercle 21 de la monture 20.

C'est également le cas de la plupart des montures en métal.

Lorsque la base de la monture est supérieure à 6, l'opérateur réalise l'acquisition du contour en trois dimensions de la lentille ophtalmique destinée à être montée dans la monture (bloc 302 de la figure 1), à l'aide par exemple de l'un des instruments standards cités précédemment. Il détermine de préférence le contour d'un seul cercle.

Cette acquisition peut être complétée par la mesure de la plus petite distance entre les lentilles ophtalmiques montées dans la monture et d'un angle représentatif de la courbure de la monture, grâce à d'autres outils.

A chacune de ces étapes, les résultats sont mis en mémoire dans l'unité de traitement informatique.

Lorsqu'il a été déterminé que la monture considérée appartient à la troisième catégorie de montures spéciales, l'opérateur détermine, comme précédemment, dans une étape préliminaire à l'étape b), si la monture considérée est une monture du type multi-maintien ou non (bloc 203 de la figure 1).

Lorsque la monture considérée n'est pas du type multi-maintien, c'est-à-dire lorsqu'elle présente des moyens de maintien des lentilles ophtalmique d'un seul type, l'opérateur réalise l'acquisition du contour en deux dimensions de la lentille ophtalmique destinée à être montée dans la monture (bloc 304 de la figure 1). Il utilise de préférence à cet effet l'un des instruments spécifiques, cités précédemment.

C'est le cas par exemple de la monture 30 de la figure 4. L'opérateur fait l'acquisition du contour en deux dimensions de l'une des lentilles ophtalmiques 35 de cette monture 30.

Il peut alors, comme décrit précédemment, faire l'acquisition de ce contour à partir d'un plan de la lentille à monter dans la monture fourni avec la monture de lunettes. Il s'agit d'un tracé du contour de la lentille ophtalmique qui est prédéterminé et associé à la monture sous une forme réelle (papier) ou virtuelle (fichier numérique).

Il peut également par exemple commander l'acquisition de ce contour à partir de la lentille de référence fournie avec la monture de lunettes, c'est-à-dire la lentille de présentation ou l'ancienne lentille livrée avec la monture.

Ce contour est mis en mémoire dans l'unité de traitement informatique.

Ici, de préférence, l'opérateur détermine le contour d'une seule lentille ophtalmique.

Cette détermination du contour peut être complétée par la mesure de la plus petite distance entre les lentilles ophtalmiques montées dans la monture et d'un angle représentatif de la courbure de la monture.

Lorsqu'il a été déterminé que la monture considérée appartient à la quatrième catégorie de montures spéciales plus, ou qu'elle appartient à la troisième catégorie et est du type multi-maintien, l'acquisition du contour de la monture est réalisé à l'aide de l'instrument spécifique mentionné précédemment en relation avec cette quatrième catégorie de montures, selon le procédé spécifique associé (bloc 305 de la figure 1).

Ce contour est mis en mémoire dans l'unité de traitement informatique.

### Etape c)

A l'étape c), selon un exemple non-revendiqué, l'opérateur évalue la valeur de chaque paramètre d'une liste de paramètres de ladite monture (bloc 400 de la figure 1).

Cette liste est déterminée en fonction de ladite catégorie de monture déterminée à l'étape a).

D'autres informations peuvent être prise en compte pour établir cette liste : par exemple, le type de la monture, cerclée, semi-cerclée, percée et le type de matériau, métal ou plastique, de la monture.

De préférence, la liste des paramètres est déterminée par l'unité de traitement informatique à partir des informations mises en mémoire aux étapes a) et b). L'unité de traitement est alors programmée à cet effet.

A l'étape c), ladite liste de paramètres de ladite monture comprend des paramètres relatifs :
- à la forme de la monture, tels que les paramètres suivants : symétrie de la monture selon un axe horizontal et/ou un axe vertical, précision du contour déterminé à l'étape b), présence et/ou position et/ou étendue des zones de concavité du contour déterminé à l'étape b), courbure globale de la monture,
- aux caractéristiques géométriques du drageoir, telles que la forme du profil du drageoir, la profondeur du drageoir, l'angle d'inclinaison entre les parois interne du drageoir, la position du drageoir par rapport aux faces avant et arrière du cercle correspondant de la monture, l'uniformité des caractéristiques du profil du drageoir le long de celui-ci,
- aux caractéristiques mécaniques de la monture, telles que le degré de flexibilité du pontet de la monture, des branches et des cercles,
- à la compatibilité du matériau utilisé pour fabriquer les lentilles ophtalmiques avec la monture,
- aux contraintes de montage de la lentille ophtalmique dans la monture, telles que la position de l'articulation entre les branches et les cercles, la possibilité de chauffage de la monture, la distance entre les branches repliées et les cercles de la monture, la résistance de la monture aux produits chimiques utilisés pour nettoyer la monture et/ou les lentilles ophtalmiques, la possibilité de retirer les lentilles ophtalmiques de la monture sans l'endommager,
- à la cohérence entre le contour en deux ou trois dimensions déterminé à l'étape b) et ladite au moins une caractéristique géométrique et/ou mécanique et/ou structurelle de cette monture déterminée à l'étape a).

Par exemple, pour une première monture de catégorie standard, semi-cerclée du type nylor, ou une deuxième monture de catégorie standard, percée (sans cercle), la liste de paramètres peut contenir les paramètres suivants :
- qualité du contour 2D mesuré,
- concavité du contour 2D,
- compatibilité avec le logiciel de traitement des informations,
- flexibilité du pontet,
- compatibilité de la lentille à monter,
- position des barillets de montage lorsque la partie supérieure de la monture est métallique,
- résistance chimique de la monture, et
- présence d'éléments décoratifs.

Pour une troisième monture de catégorie standard, cerclée, ou une quatrième monture de catégorie standard plus, cerclée, la liste de paramètres peut contenir les paramètres cités précédemment, et les paramètres additionnels suivants :
- symétrie de la monture,
- bruit sur le contour 3D mesuré,
- profil du drageoir,
- base de la monture,
- centrage du drageoir,
- uniformité de l'angle du drageoir,
- uniformité de la profondeur du drageoir,
- profondeur minimum du drageoir,
- forme du drageoir en U,
- flexibilité des cercles,
- flexibilité de la cote B du cercle,
- possibilité de chauffage de la monture lorsque celle-ci est en plastique, et
- distance entre les branches repliées et la face arrière de la lentille.

La valeur d'au moins une partie desdits paramètres est évaluée en fonction dudit contour déterminé à l'étape b).

Selon l'invention revendiquée, cette évaluation est réalisée par l'unité de traitement informatique.

Dans les exemples de la liste de paramètres donnés ci-dessus, il s'agit notamment des paramètres relatifs à la forme de la monture.

La détermination des paramètres de forme de la monture permet en outre d'effectuer une vérification de la qualité du contour déterminé à l'étape b).

Le paramètre de symétrie de la monture est évalué par l'unité de traitement informatique en comparant les cotes A et B du contour, pour les cercles droit et gauche. Ces cotes A et B correspondent aux largeurs et hauteur boxing du contour. Il s'agit en pratique des largeur et hauteur d'un rectangle boxing dans lequel est inscrit le cercle de la monture. Il s'agit des symétries par rapport à deux plans médians orthogonaux de chaque cercle de la monture.

La qualité du contour en deux dimensions mesuré peut être altérée par des vibrations de l'instrument utilisé pour la mesure, l'usure du palpeur ou encore des défauts de moulage du drageoir par exemple. Il s'agit ici d'évaluer la précision du contour mesuré déterminé à l'étape b).

Le paramètre de qualité du contour mesuré est évalué par l'unité de traitement informatique en comparant le contour en deux dimensions mesuré et un contour attendu, prédéterminé et associé à la monture, de manière réelle ou virtuelle.

Ce contour attendu peut faire partie des caractéristiques géométriques de la monture déterminées à l'étape a). Ce paramètre se rapporte alors à la cohérence entre le contour déterminé à l'étape b) et les caractéristiques de la monture déterminées à l'étape a).

Ce contour attendu est ici une forme convexe théorique extrapolée par l'unité de traitement informatique à partir des points mesurés du contour.

La différence entre ces deux contours peut être exprimée en un pourcentage correspondant par exemple au pourcentage de points mesurés situés à l'intérieur du contour attendu lorsque le contour mesuré et le contour attendu sont superposés.

Ces points définissent des zones concaves du contour mesuré. Une première valeur seuil de pourcentage de points appartenant à une zone concave de la monture est associée au paramètre de qualité. Lorsque le pourcentage de points appartenant à une zone concave de la monture déterminé est inférieur à cette première valeur seuil, le paramètre de qualité déterminé par l'unité de traitement informatique prend une première valeur indiquant que la qualité du contour mesuré est satisfaisante.

Lorsque le pourcentage de points appartenant à une zone concave de la monture déterminé est supérieur à cette première valeur seuil, le paramètre de qualité déterminé par l'unité de traitement informatique prend une deuxième valeur indiquant que la qualité du contour mesuré n'est pas satisfaisante, sauf si le paramètre de concavité indique que le contour est concave.

Le paramètre de concavité est un paramètre binaire dont la valeur est déterminé par l'unité de traitement informatique à partir du pourcentage de points appartenant à une zone concave de la monture déterminé précédemment. Il est associé à une deuxième valeur seuil de pourcentage supérieure à la première valeur seuil.

Lorsque le pourcentage de points appartenant à une zone concave de la monture déterminé est inférieur à cette deuxième valeur seuil, l'unité de traitement informatique détermine que le paramètre de concavité prend une première valeur indiquant que le contour mesuré est convexe.

Le paramètre de concavité est par exemple fixé à 1.

Lorsque le pourcentage de points appartenant à une zone concave de la monture déterminé est supérieur à cette deuxième valeur seuil, l'unité de traitement informatique détermine que le paramètre de concavité prend une deuxième valeur indiquant que le contour mesuré présente des parties concaves non liées à une qualité insuffisante du contour mesuré.

Le paramètre de concavité reste par exemple à 0.

Il peut également être un paramètre numérique dont la valeur reflète celle du pourcentage déterminé. Le paramètre de concavité peut également refléter l'étendue des régions concaves du contour déterminé à l'étape b). Ce paramètre peut également tenir compte de la position des régions concaves sur ce contour.

Le paramètre de bruit de mesure du contour en trois dimensions est déterminé en examinant visuellement les tracés de ces contours affichés sur un écran, appartenant par exemple à l'unité de traitement informatique. Il s'agit ici aussi d'un paramètre binaire. La présence d'irrégularités dans ce tracé entraîne la mise à la valeur 1 de ce paramètre.

Ce paramètre peut également être déterminé par l'unité de traitement informatique par comparaison entre le contour mesuré et un contour théorique, par exemple déterminé par l'unité de commande électronique en fonction des points mesurés du contour.

Lorsque ce paramètre est à 1, l'opérateur recherche dans le drageoir de la monture s'il existe des irrégularités pouvant expliquer celles observées sur le contour mesuré. Sinon, la détermination du contour en trois dimensions est répétée.

Le paramètre de compatibilité avec le logiciel de traitement des informations est un paramètre binaire qui indique si les informations disponibles pour les logiciels de traitement de l'information sur la monture sont suffisantes.

Par exemple, les informations sur la monture sont transmises à un logiciel de l'unité de traitement informatique, qui les compare aux informations disponibles sur la lentille destinée à être montée dans la monture (matériau, puissance...) et détermine par calcul si le montage de la lentille dans cette monture est possible. Le paramètre de compatibilité avec le logiciel indique si les informations disponibles sur la monture sont suffisantes pour faire ce calcul.

Le paramètre de base de la monture est un paramètre binaire qui est mis à 1 lorsque la base de la monture est supérieure audit seuil de base prédéterminé, par exemple égal à 6 dioptries.

Les paramètres relatifs au drageoir permettent de prendre en compte différentes caractéristiques géométriques de ce drageoir, telles que, la forme globale du profil du drageoir, et les dimensions de ce profil. Par exemple, dans le cas d'un profil en V, l'angle entre les parois internes de ce drageoir et la profondeur de ce drageoir sont mesurés. Ces paramètres sont numériques, avec une valeur égale à la valeur de l'angle ou de la profondeur mesurée.

Ces paramètres relatifs au drageoir peuvent également refléter l'uniformité des caractéristiques géométriques précitées du drageoir le long de celui-ci, c'est-à-dire tout autour du cercle de la monture. En effet, un manque d'uniformité peut rendre impossible le montage de la lentille dans le cercle.

Le paramètre de centrage du drageoir est un paramètre binaire qui est mis à 1 lorsque le drageoir n'est pas centré, c'est-à-dire n'est pas symétrique par rapport à l'épaisseur du cercle correspondant de la monture. Il peut également s'agir d'un paramètre numérique dont la valeur reflète le décentrage du drageoir.

Enfin, la forme classique du drageoir est en V. Si le drageoir présente une autre forme, notamment en U, le paramètre de forme du drageoir reflète cette particularité.

Les paramètres relatifs au drageoir sont déterminés car ils peuvent avoir une influence sur le montage des lentilles dans le drageoir. En conséquence, certains éléments de la consigne de détourage peuvent être déterminés en fonction de ces paramètres.

Les paramètres de flexibilité du pontet, de flexibilité des cercles, et de flexibilité de la cote B du cercle sont évalués manuellement par l'opérateur.

La compatibilité de la lentille à monter concerne par exemple la compatibilité des matériaux de la monture et de la lentille ophtalmique. Par exemple, une monture en acétate est incompatible avec des lentilles en polycarbonates. Il s'agit ici d'un paramètre binaire. Il peut s'agir également d'une compatibilité relative à l'épaisseur et/ou à l'indice de la lentille.

De manière générale, ces paramètres sont déterminés par l'unité de traitement informatique.

L'opérateur évalue également des paramètres relatifs au montage des lentilles dans la monture, par exemple la position des barillets de montage de la monture lorsqu'elle est métallique ou la possibilité de chauffage de la monture pour les montures plastiques. Ces paramètres peuvent être binaires pour indiquer simplement si la position ou le chauffage est acceptable, ou numérique, avec une valeur indiquant l'écart à la position optimale des barillets ou la plage de température autorisée pour le chauffage.

L'unité de traitement informatique peut également être programmée pour déterminer ces paramètres, par exemple à partir d'une image capturée de la monture ou d'une information sur le matériau de la monture saisie par l'opérateur.

Le paramètre de distance entre les branches repliées et la face arrière de la lentille indique si les branches peuvent être repliées quelle que soit l'épaisseur de la lentille. De manière similaire, ces paramètres peuvent être binaires pour indiquer simplement si le repliement est possible, ou numérique, avec une valeur indiquant la distance minimale entre les cercles et les branches lorsque celles-ci sont repliées. L'unité de traitement informatique peut également être programmée pour déterminer ce paramètre, par exemple à partir d'une image capturée de la monture.

Le paramètre sur la résistance chimique indique si la monture peut être nettoyée par les produits chimiques couramment utilisés sans risquer de dégrader l'aspect de cette monture.

Enfin, le paramètre concernant la présence d'éléments décoratifs indique la présence d'éléments de la monture s'étendant en débord au-dessus de l'emplacement de la lentille ophtalmique. La présence d'un tel élément peut empêcher la lecture du contour des cercles de la monture par certains instruments, voir par tout instrument. Ce paramètre peut être binaire ou refléter la distance entre le point de cet élément le plus éloigné du bord interne du cercle de la monture et ce bord interne.

D'autres paramètres peuvent également être envisagés, par exemple, des paramètres reflétant l'esthétique globale de la monture, les défauts de fabrication de la monture, le fait que les lentilles de référence puissent être retirées de la monture sans l'endommager par exemple.

Selon l'invention revendiquée, l'unité de traitement informatique est programmée pour déterminer la valeur de tous ces paramètres.

### Etape d)

A l'étape d), chaque valeur de l'un des paramètres de la monture évaluée à l'étape c) est associée à un score de la monture pour ce paramètre, et la conformité de la monture au critère prédéterminé est déterminée en fonction des scores de cette monture.

En pratique, l'unité de traitement informatique est programmée pour déterminer le score de la monture pour chaque paramètre, en fonction de la valeur de ce paramètre déterminée à l'étape c).

Plus précisément, la conformité de la monture au critère prédéterminé est déterminée par comparaison entre le score de la monture pour chaque paramètre évalué et un score de référence associé à ce paramètre.

En pratique, l'unité de traitement informatique est alors programmée pour comparer le score de la monture pour chaque paramètre audit score de référence associé à ce paramètre, mis en mémoire dans cet unité de traitement informatique.

Ledit score de référence dépend du critère d'utilisation à vérifier.

Ce critère d'utilisation peut être par exemple le critère de faisabilité ou le critère de faisabilité industrielle mentionné précédemment. En fonction de cette comparaison, l'unité de traitement informatique détermine la conformité de la monture au critère d'utilisation correspondant aux scores de référence utilisés.

On peut par exemple envisager que le score associé à chaque paramètre soit égal à la valeur de ce paramètre et que le score de référence soit égal à une valeur seuil de ce paramètre. Lorsque la valeur de chaque paramètre est supérieure à la valeur seuil de ce paramètre, la monture est vérifiée conforme au critère d'utilisation auquel les valeurs seuil des paramètres sont associées.

Ainsi, la méthode de vérification selon l'invention donne au final à l'opérateur un indicateur relatif à la faisabilité et/ou à la faisabilité industriel selon un procédé donné d'une paire de lunettes comprenant la monture considérée.

Cet indicateur peut être numérique ou visuel.

Il est donné ici par l'unité de traitement informatique.

Dans le cas ou l'indicateur est visuel, il peut comprendre par exemple une représentation graphique des scores associé à chaque paramètre, par exemple sur un diagramme en toile d'araignée ou radar. Il peut s'agir d'un diagramme en bâton pour des scores binaires. De préférence, la méthode selon l'invention fournit l'indicateur relatif au critère de faisabilité puis, pour les montures conformes à ce critère, l'indicateur relatif au critère de faisabilité industriel.

Cette représentation graphique peut être affichée sur l'écran de l'unité de traitement informatique.

L'indicateur peut également comprendre un signal sonore émis par l'unité de traitement informatique.

Grâce à la méthode selon l'invention, il est également possible vérifier la conformité de la monture considérée avec un critère de qualité de la paire de lunettes obtenue.

Il est également possible de mettre en évidence une non reproductibilité de montures de lunettes de même référence.

Ceci est possible grâce à la mise en mémoire des caractéristiques géométriques et/ou mécaniques et/ou structurelles de cette monture déterminées à l'étape a) et des valeurs des paramètres déterminés à l'étape c) dans une base de données représentative des montures du marché.

Une analyse statistique de ces données par l'unité de traitement informatique permet de mettre en évidence les montures de lunettes de même référence non conforme aux critères de faisabilité et/ou faisabilité industrielle et/ou de qualité.

En outre, elle autorise la mise en évidence des montures de lunettes pour lesquelles les procédés de traitement standards sont interdits. Un signal d'alerte peut être transmis à l'opérateur lorsque la monture considérée est dans ce cas.

## Revendications

1. Méthode de vérification de la conformité à un critère d'utilisation prédéterminé d'une monture de lunettes (10 ; 20 ; 30 ; 40) destinée à recevoir deux lentilles ophtalmiques (15 ; 25 ; 35 ; 45), mise en oeuvre à l'aide d'une unité de traitement informatique, ce critère d'utilisation étant un critère de faisabilité industrielle indiquant que la monture est adaptée à recevoir les lentilles ophtalmiques correspondantes à travers un procédé de fabrication industriel prédéterminé (10 ; 20 ; 30 ; 40),
selon laquelle on détermine un ensemble de catégories de montures relatives aux technologies de lecture des montures et de taillage des lentilles ophtalmiques correspondantes et on réalise les étapes suivantes :
a) on détermine (100) au moins une caractéristique géométrique et/ou mécanique et /ou structurelle de cette monture (10 ; 20 ; 30 ; 40) comprenant au moins l'une des caractéristiques géométriques et/ou mécaniques et/ou structurelles suivantes :
- forme de la monture (10 ; 20 ; 30 ; 40) pouvant favoriser les collisions entre les lentilles ophtalmiques et la monture au-delà d'une épaisseur seuil de la lentille ophtalmique,
- présence d'éléments recouvrant partiellement une face arrière ou avant de la lentille ophtalmique disposée dans la monture (10 ; 20 ; 30 ; 40), et
- présence de zones de concavité dans ledit contour du cercle (21, 31) de la monture (20 ; 30) ou de la lentille ophtalmique (25 ; 35) correspondante, et l'unité de traitement informatique en déduit, parmi ledit ensemble de catégories de montures prédéterminées, la catégorie de monture à laquelle appartient ladite monture,
b) on commande, par l'unité de traitement informatique, la détermination (301, 302, 303, 304, 305) d' un contour en deux ou trois dimensions d'au moins une desdites lentilles ophtalmiques (15; 25; 35; 45) destinées à être montées dans ladite monture ou d'un cercle (21 ; 31 ; 41) de cette monture, à l'aide d'un instrument choisi en fonction de la catégorie de monture déduite à l'étape a),
c) on évalue (400), par l'unité de traitement informatique, la valeur de chaque paramètre d'une liste de paramètres de ladite monture, cette liste étant déterminée en fonction de ladite catégorie de monture déterminée à l'étape a), et la valeur d'au moins une partie desdits paramètres étant évaluée en fonction dudit contour déterminé à l'étape b),
d) chaque valeur de l'un des paramètres de la monture évaluée à l'étape c) étant associée à un score de la monture (10 ; 20 ; 30 ; 40) pour ce paramètre, on déduit (500), par l'unité de traitement informatique, des valeurs desdits paramètres de la monture déterminées à l'étape c) la conformité de la monture au critère prédéterminé en fonction des scores de cette monture, par comparaison entre le score de la monture pour chaque paramètre évalué et un score de référence associé à ce paramètre, ledit score de référence dépendant du critère d'utilisation à vérifier.

2. Méthode de vérification selon la revendication 1, selon laquelle, ladite caractéristique géométrique et/ou mécanique et/ou structurelle de cette monture (10 ; 20 ; 30 ; 40) déterminée à l'étape a), est relative au type d'instrument nécessaire pour déterminer ledit contour en deux ou trois dimensions de la lentille ophtalmique (15 ; 25 ; 35 ; 45) destinée à être montée dans ladite monture (10 ; 20 ; 30 ; 40) ou du cercle (21 ; 31 ; 41) de cette monture, et/ou au type d'instrument nécessaire pour détourer cette lentille ophtalmique (15 ; 25 ; 35 ; 45).

3. Méthode de vérification selon l'une des revendications 1 et 2, selon laquelle, une autre de ladite au moins une caractéristique géométrique et/ou mécanique et/ou structurelle de la monture déterminée à l'étape a), comprend au moins l'une des caractéristiques suivantes :
- forme générale de la monture (10 ; 20 ; 30 ; 40),
- type de maintien des lentilles ophtalmiques (15 ; 25 ; 35 ; 45) sur la monture (10 ; 20 ; 30 ; 40),
- forme du profil du drageoir de la monture (10 ; 20 ; 30 ; 40) et/ou position de ce drageoir par rapport aux faces avant et arrière de la monture (10 ; 20 ; 30 ; 40),
- forme de la partie nasale (13A ; 23A ; 33 ; 43A) de la monture (10 ; 20 ; 30 ; 40), destinée à être en contact avec le nez du porteur,
- caractéristiques mécaniques du matériau de la monture (10 ; 20 ; 30 ; 40).

4. Méthode de vérification selon l'une des revendications 1 à 3, selon laquelle, à l'étape a), chaque caractéristique géométrique et/ou mécanique et/ou structurelle de la monture (10 ; 20 ; 30 ; 40) est déterminée par lecture d'un fichier d'identification de la monture (10 ; 20 ; 30 ; 40) associé à cette monture.

5. Méthode de vérification selon l'une des revendications 1 à 3, selon laquelle, à l'étape a), ladite au moins une caractéristique géométrique et/ou mécanique et/ou structurelle de la monture (10 ; 20 ; 30 ; 40) est déterminée visuellement par un opérateur.

6. Méthode de vérification selon l'une des revendications 1 à 5, selon laquelle, à l'étape b), le contour en deux dimensions de la lentille ophtalmique destinée à être montée dans ladite monture (10 ; 20 ; 30 ; 40) est déterminé par une acquisition d'image d'une lentille ophtalmique (15 ; 25 ; 35 ; 45) de référence associée à ladite monture (10 ; 20 ; 30 ; 40) ou sur la base d'un plan de lentille ophtalmique (15 ; 25 ; 35 ; 45) associé à ladite monture (10 ; 20 ; 30 ; 40).

7. Méthode de vérification selon l'une des revendications 1 à 5, selon laquelle, à l'étape b), on détermine le contour en trois dimensions d'un cercle (21 ; 31) de cette monture (20 ; 30) en déterminant la position en trois dimensions du drageoir de ce cercle.

8. Méthode de vérification selon l'une des revendications 1 à 7, selon laquelle, à l'étape c) ladite liste de paramètres de ladite monture comprend des paramètres relatifs :
- à la forme de la monture (10 ; 20 ; 30 ; 40), tels que les paramètres suivants : symétrie de la monture selon un axe horizontal et/ou un axe vertical, précision du contour déterminé à l'étape b), présence et/ou position et/ou étendue des zones de concavité du contour déterminé à l'étape b), courbure globale de la monture,
- aux caractéristiques géométriques du drageoir, telle que la forme du profil du drageoir, la profondeur du drageoir, l'angle d'inclinaison entre les parois interne du drageoir, la position du drageoir par rapport aux faces avant et arrière du cercle correspondant de la monture, l'uniformité des caractéristiques du profil du drageoir le long de celui-ci,
- aux caractéristiques mécaniques de la monture (10 ; 20 ; 30 ; 40), telles que le degré de flexibilité du pontet de la monture, des branches et des cercles,
- à la compatibilité du matériau utilisé pour fabriquer les lentilles ophtalmiques avec la monture (10 ; 20 ; 30 ; 40),
- aux contraintes de montage de la lentille ophtalmique (15 ; 25 ; 35 ; 45) dans la monture, telles que la position de l'articulation entre les branches (22 ; 32) et les cercles (21 ; 31), la possibilité de chauffage de la monture, la distance entre les branches repliées et les cercles (21, 31) de la monture, la résistance de la monture aux produits chimiques utilisés pour nettoyer la monture et/ou les lentilles ophtalmiques, la possibilité de retirer les lentilles de référence de la monture sans l'endommager,
- à la cohérence entre le contour en deux ou trois dimensions déterminé à l'étape b) et ladite au moins une caractéristique géométrique et/ou mécanique et/ou structurelle de cette monture déterminée à l'étape a).

9. Dispositif de vérification de la conformité à un critère d'utilisation prédéterminé d'une monture de lunettes (10 ; 20 ; 30 ; 40) destinée à recevoir deux lentilles ophtalmiques (15 ; 25 ; 35 ; 45), comprenant une unité de traitement informatique programmée pour commander la réalisation ou réaliser les étapes de la méthode de vérification selon l'une des revendications 1 à 8.

10. Dispositif de vérification de la conformité à un critère d'utilisation prédéterminé d'une monture de lunettes (10 ; 20 ; 30 ; 40) destinée à recevoir deux lentilles ophtalmiques (15 ; 25 ; 35 ; 45) selon la revendication 9, comprenant en outre un instrument de mesure d'un contour en deux ou trois dimensions d'au moins une desdites lentilles ophtalmiques (15 ; 25 ; 35 ; 45) destinées à être montées dans ladite monture ou d'un cercle (21 ; 31 ; 41) de cette monture, adapté à réaliser l'étape b) de la méthode de vérification selon l'une des revendications 1 à 8.

## Patentansprüche

1. Verfahren zur Überprüfung der Konformität mit einem vorbestimmten Verwendungskriterium einer Brillenfassung (10; 20; 30; 40), die dazu vorgesehen ist, zwei Brillengläser (15; 25; 35; 45) aufzunehmen, durchgeführt mithilfe einer Datenverarbeitungseinheit, wobei dieses Verwendungskriterium ein Kriterium der industriellen Durchführbarkeit ist, das angibt, dass die Fassung dazu geeignet ist, die entsprechenden Brillengläser durch einen vorbestimmten industriellen Herstellungsprozess (10; 20; 30; 40) aufzunehmen;
wobei eine Gesamtheit von Fassungskategorien in Bezug auf die Technologien des Lesens der Fassungen und des Schneidens der entsprechenden Brillengläser bestimmt wird und die folgenden Schritte durchgeführt werden:
a) Bestimmen (100) mindestens einer geometrischen und/oder mechanischen und/oder strukturellen Eigenschaft dieser Fassung (10; 20; 30; 40), die mindestens eine der geometrischen und/oder mechanischen und/oder strukturellen Eigenschaften umfasst:
- Form der Fassung (10; 20; 30; 40), die Kollisionen zwischen den Brillengläsern und der Fassung jenseits einer Schwellendicke des Brillenglases begünstigen kann;
- Vorhandensein von Elementen, die teilweise eine Rück- oder Vorderseite des in der Fassung (10; 20; 30; 40) angeordneten Brillenglases bedecken können, und
- Vorhandensein von Konkavitätszonen in der Kontur des Rahmens (21, 31) der Fassung (20; 30) oder des entsprechenden Brillenglases (25; 35), und die Datenverarbeitungseinheit leitet daraus, aus der Gesamtheit vorbestimmter Fassungskategorien, die Fassungskategorie ab, zu der die Fassung gehört,
b) durch die Datenverarbeitungseinheit Steuern des Bestimmens (301, 302, 303, 304, 305) einer Kontur in zwei oder drei Dimensionen des mindestens einen der Brillengläser (15; 25; 35; 45), die dazu vorgesehen sind, in die Fassung oder einen Rahmen (21, 31, 41) dieser Fassung mithilfe eines Instruments eingesetzt zu werden, das in Abhängigkeit von der in Schritt a) abgeleiteten Fassungskategorie ausgewählt wird,
c) durch die Datenverarbeitungseinheit Bewerten (400) des Wertes jedes Parameters einer List von Parametern der Fassung, wobei diese Liste in Abhängigkeit von der in Schritt a) bestimmten Fassungskategorie bestimmt wird und der Wert mindestens eines Teils der Parameter in Abhängigkeit von der in Schritt b) bestimmten Kontur bewertet wird,
d) nachdem jeder in Schritt c) bewertete Wert eines der Parameter der Fassung einem Punktwert der Fassung (10; 20; 30; 40) für diesen Parameter zugeordnet wurde, durch die Datenverarbeitungseinheit Ableiten (500) der Konformität der Fassung mit dem vorbestimmten Kriterium in Abhängigkeit von den Punktwerten dieser Fassung aus den in Schritt c) bestimmten Werten der Parameter der Fassung durch Vergleich zwischen dem Punktwert der Fassung für jeden bewerteten Parameter und einem diesem Parameter zugeordneten Referenzpunktwert, wobei der Referenzpunktwert von dem zu überprüfenden Verwendungskriterium abhängt.

2. Verfahren zur Überprüfung nach Anspruch 1, wobei die in Schritt a) bestimmte geometrische und/oder mechanische und/oder strukturelle Eigenschaft dieser Fassung (10; 20; 30; 40) sich bezieht auf die Art von Instrument, das notwendig ist, um die Kontur des Brillenglases (15; 25; 35; 45), das dazu vorgesehen ist, in die Fassung (10; 20; 30; 40) oder in den Rahmen (21; 31; 41) dieser Fassung eingesetzt zu werden, in zwei oder drei Dimensionen zu bestimmen, und/oder auf die Art von Instrument, das notwendig ist, um dieses Brillenglas (15; 25; 35; 45) auszuschneiden.

3. Verfahren zur Überprüfung nach einem der Ansprüche 1 und 2, wobei eine andere der mindestens einen in Schritt a) bestimmten geometrischen und/oder mechanischen und/oder strukturellen Eigenschaft der Fassung mindestens eines der folgenden Eigenschaften umfasst:
- allgemeine Form der Fassung (10; 20; 30; 40),
- Art der Befestigung des Brillenglases (15; 25; 35; 45) an der Fassung (10; 20; 30; 40),
- Form des Profils der Aufnahmenut der Fassung (10; 20; 30; 40) und/oder Position dieser Aufnahmenut bezüglich der Vorder- und Rückseite der Fassung (10; 20; 30; 40),
- Form des Nasenteils (13A, 23A; 33; 43A) der Fassung (10; 20; 30; 40), der dazu vorgesehen ist, mit der Nase des Trägers Kontakt zu haben,
- mechanische Eigenschaften des Materials der Fassung (10; 20; 30; 40).

4. Verfahren zur Überprüfung nach einem der Ansprüche 1 bis 3, wobei in Schritt a) jede geometrische und/oder mechanische und/oder strukturelle Eigenschaft der Fassung (10; 20; 30; 40) durch Lesen einer dieser Fassung zugeordneten Identifikationsdatei der Fassung ((10; 20; 30; 40) bestimmt wird.

5. Verfahren zur Überprüfung nach einem der Ansprüche 1 bis 3, wobei in Schritt a) die mindestens eine geometrische und/oder mechanische und/oder strukturelle Eigenschaft der Fassung (10; 20; 30; 40) visuell durch einen Bediener bestimmt wird.

6. Verfahren zur Überprüfung nach einem der Ansprüche 1 bis 5, wobei in Schritt b) die Kontur des Brillenglases, das dazu vorgesehen ist, in die Fassung (10; 20; 30; 40) eingesetzt zu werden, in zwei Dimensionen durch Erfassen des Bildes eines dieser Fassung (10; 20; 30; 40) zugeordneten Referenzbrillenglases (15; 25; 35; 45) oder auf Grundlage eines der Fassung (10; 20; 30; 40) zugeordneten Plans des Brillenglases (15; 25; 35; 45) bestimmt wird.

7. Verfahren zur Überprüfung nach einem der Ansprüche 1 bis 5, wobei in Schritt b) die Kontur eines Rahmens (21; 31) dieser Fassung (20; 30) in drei Dimensionen bestimmt wird, indem die Position der Aufnahmenut dieses Rahmens in drei Dimensionen bestimmt wird.

8. Verfahren zur Überprüfung nach einem der Ansprüche 1 bis 7, wobei in Schritt c) die Liste von Parametern der Fassung Parameter umfasst in Bezug auf:
- die Form der Fassung (10; 20; 30; 40) wie etwa die folgenden Parameter: Symmetrie der Fassung entlang einer horizontalen Achse und/oder einer vertikalen Achse, Präzision der in Schritt b) bestimmten Kontur, Vorhandensein und/oder Position und/oder Erstreckung der Konkavitätszonen der Schritt b) bestimmten Kontur, Gesamtkrümmung der Fassung,
- die geometrischen Eigenschaften der Aufnahmenut wie etwa die Form des Profils der Aufnahmenut, die Tiefe der Aufnahmenut, den Neigungswinkel zwischen den Innenwänden der Aufnahmenut, die Position der Aufnahmenut bezüglich der Vorder- und Rückseite des entsprechenden Rahmens der Fassung, die Gleichmäßigkeit der Eigenschaften des Profils der Aufnahmenut über deren Länge,
- die mechanischen Eigenschaften der Fassung (10; 20; 30; 40) wie etwa den Grad der Flexibilität des Stegs der Fassung, der Bügel und der Rahmen,
- die Kompatibilität des Materials, das zur Herstellung der Brillengläser verwendet wird, mit der Fassung (10; 20; 30; 40),
- die Einschränkungen beim Einsetzen des Brillenglases (15; 25; 35; 45) in die Fassung wie etwa die Position des Gelenks zwischen den Bügeln (22; 32) und den Rahmen (21; 31), die Möglichkeit einer Heizung der Fassung, den Abstand zwischen den eingeklappten Bügeln und den Rahmen (21; 31) der Fassung, die Beständigkeit der Fassung gegen chemische Produkte, die zum Reinigen der Fassung und/oder der Brillengläser verwendet werden, die Möglichkeit die Referenzlinsen aus der Fassung zu nehmen, ohne sie zu beschädigen,
- die Kohärenz zwischen der in Schritt b) bestimmten Kontur in zwei oder drei Dimensionen und der mindestens einen in Schritt a) bestimmten geometrischen und/oder mechanischen und/oder strukturellen Eigenschaft dieser Fassung.

9. Vorrichtung zur Überprüfung der Konformität mit einem Verwendungskriterium einer Brillenfassung (10; 20; 30; 40), die dazu vorgesehen ist, zwei Brillengläser (15; 25; 35; 45) aufzunehmen, umfassend eine Datenverarbeitungseinheit, die dazu programmiert ist, die Durchführung zu steuern oder die Schritte des Verfahrens zur Überprüfung nach einem der Ansprüche 1 bis 8 durchzuführe.

10. Vorrichtung zur Überprüfung der Konformität mit einem vorbestimmten Verwendungskriterium einer Brillenfassung (10; 20; 30; 40), die dazu vorgesehen ist, zwei Brillengläser (15; 25; 35; 45) aufzunehmen, nach Anspruch 9, außerdem umfassend ein Instrument zur Messung einer Kontur mindestens eines der Brillengläser (15; 25; 35; 45), die dazu vorgesehen sind, in die Fassung oder einen Rahmen (21; 31; 41) dieser Fassung eingesetzt zu werden, in zwei oder drei Dimensionen, und dazu eingerichtet ist, Schritt b) des Verfahrens zur Überprüfung nach einem der Ansprüche 1 bis 8 durchzuführen.

## Claims

1. Method for verifying conformity with a predetermined criterion of use of a spectacle frame (10; 20; 30; 40) intended to receive two ophthalmic lenses (15; 25; 35; 45), implemented with the aid of a computer processing unit, this criterion of use being a criterion of industrial feasibility indicating that the frame (10; 20; 30; 40) is adapted to receive the corresponding ophthalmic lenses via a predetermined industrial fabrication process,
according to which a set of frame categories relating to the corresponding frame tracing technologies and ophthalmic lens trimming technologies is determined and the following steps are carried out:
a) at least one geometrical and/or mechanical and/or structural characteristic of this frame (10; 20; 30; 40) is determined (100), comprising at least one of the following geometrical and/or mechanical and/or structural characteristics:
- shape of the frame (10; 20; 30; 40) that may encourage collisions between ophthalmic lenses and frames above a threshold thickness of the ophthalmic lens,
- presence of elements partly covering a rear or front face of the ophthalmic lens disposed in the frame (10; 20; 30; 40), and
- presence of areas of concavity in said outline of the rim (21, 31) of the frame (20; 30) or of the corresponding ophthalmic lens (25; 35), and the computer processing unit deduces therefrom the frame category to which said frame belongs from said set of predetermined frame categories,
b) the determination (301, 302, 303, 304, 305) of an outline in two or three dimensions of at least one of said ophthalmic lenses (15; 25; 35; 45) intended to be mounted in said frame or of a rim (21; 31; 41) of this frame is controlled by the computer processing unit, with the aid of an instrument selected as a function of the frame category deduced in step a),
c) the value of each parameter from a list of parameters of said frame is evaluated (400) by the computer processing unit, this list being determined as a function of said frame category determined in step a), and the value of at least some of said parameters being evaluated as a function of said outline determined in step b),
d) each value of one of the parameters of the frame evaluated in step c) being associated with a score of the frame (10; 20; 30; 40) for that parameter, the conformity of the frame to the predetermined criterion is deduced (500), by the computer processing unit, from the values of said parameters of the frame determined in step c), as a function of the scores of this frame, by comparing the score of the frame for each evaluated parameter and a reference score associated with this parameter, said reference score being dependent on the criterion of use to be verified.

2. Verification method according to Claim 1, according to which said geometrical and/or mechanical and/or structural characteristic of this frame (10; 20; 30; 40) determined in step a) relates to the type of instrument necessary for determining said outline in two or three dimensions of the ophthalmic lens (15; 25; 35; 45) intended to be mounted in said frame (10; 20; 30; 40) or of the rim (21; 31; 41) of this frame, and/or to the type of instrument necessary for edging this ophthalmic lens (15; 25; 35; 45).

3. Verification method according to either of Claims 1 and 2, according to which another of said at least one geometrical and/or mechanical and/or structural characteristic of the frame determined in step a) comprises at least one of the following characteristics:
- general shape of the frame (10; 20; 30; 40),
- type of retention of the ophthalmic lenses (15; 25; 35; 45) to the frame (10; 20; 30; 40),
- shape of the profile of the bezel of the frame (10; 20; 30; 40) and/or position of this bezel relative to the front and rear faces of the frame (10; 20; 30; 40),
- shape of the nose portion (13A; 23A; 33; 43A) of the frame (10; 20; 30; 40) intended to be in contact with the nose of the wearer,
- mechanical characteristics of the material of the frame (10; 20; 30; 40).

4. Verification method according to one of Claims 1 to 3, according to which in step a) each geometrical and/or mechanical and/or structural characteristic of the frame (10; 20; 30; 40) is determined by reading an identification file of the frame (10; 20; 30; 40) associated with this frame.

5. Verification method according to one of Claims 1 to 3, according to which in step a) said at least one geometrical and/or mechanical and/or structural characteristic of the frame (10; 20; 30; 40) is determined visually by an operator.

6. Verification method according to one of Claims 1 to 5, according to which in step b) the outline in two dimensions of the ophthalmic lens intended to be mounted in said frame (10; 20; 30; 40) is determined by image acquisition from a reference ophthalmic lens (15; 25; 35; 45) associated with said frame (10; 20; 30; 40) or on the basis of an ophthalmic lens drawing (15; 25; 35; 45) associated with said frame (10; 20; 30; 40).

7. Verification method according to one of Claims 1 to 5, according to which in step b) the outline in three dimensions of a rim (21; 31) of this frame (20; 30) is determined by determining the position in three dimensions of the bezel of this rim.

8. Verification method according to one of Claims 1 to 7, according to which in step c) said list of parameters of said frame comprises parameters relating to:
- the shape of the frame (10; 20; 30; 40), such as the following parameters: symmetry of the frame about a horizontal axis and/or a vertical axis, accuracy of the outline determined in step b), presence and/or position and/or extent of the areas of concavity of the outline determined in step b), overall curvature of the frame,
- geometrical characteristics of the bezel, such as the shape of the profile of the bezel, the depth of the bezel, the angle of inclination between the internal walls of the bezel, the position of the bezel relative to the front and rear faces of the corresponding rim of the frame, the uniformity of the characteristics of the profile of the bezel along the latter,
- the mechanical characteristics of the frame (10; 20; 30; 40), such as the degree of flexibility of the bridge of the frame, the temples and the rims,
- the compatibility with the frame (10; 20; 30; 40) of the material used to manufacture the ophthalmic lenses,
- the constraints on mounting the ophthalmic lens (15; 25; 35; 45) in the frame, such as the position of the articulation between the temples (22; 32) and the rims (21; 31), the possibility of heating the frame, the distance between the folded temples and the rims (21; 31) of the frame, the resistance of the frame to chemical products used to clean the frame and/or the ophthalmic lenses, the possibility of removing the reference lenses from the frame without damaging it,
- the consistency between the outline in two or three dimensions determined in step b) and said at least one geometrical and/or mechanical and/or structural characteristic of this frame determined in step a).

9. Device for verifying the conformity with a predetermined criterion of use of a spectacle frame (10; 20; 30; 40) intended to receive two ophthalmic lenses (15; 25; 35; 45), comprising a computer processing unit programmed to control the execution of or to execute the steps of the verification method according to one of Claims 1 to 8.

10. Device for verifying the conformity with a predetermined criterion of use of a spectacle frame (10; 20; 30; 40) intended to receive two ophthalmic lenses (15; 25; 35; 45) according to Claim 9, further comprising an instrument for measuring an outline in two or three dimensions of at least one of said ophthalmic lenses (15; 25; 35; 45) intended to be mounted in said frame or of a rim (21; 31; 41) of this frame, said instrument being adapted to execute step b) of the verification method according to one of Claims 1 to 8.
